# EUROPÄISCHE PATENTSCHRIFT

(11) **EP 1 984 141 B1**
(45) Veröffentlichungstag und Bekanntmachung des Hinweises auf die Patenterteilung: **08.04.2015**
(21) Anmeldenummer: 07726301.0
(22) Anmeldetag: 02.02.2007
(51) Int. Cl.: B23Q 1/34, B23Q 11/00, B23Q 17/09, B23B 29/12

(54) **WERKZEUGMASCHINE ZUR REGELUNG DER SPANABHEBENDEN WERKSTÜCKBEARBEITUNG MIT EINSATZ VON PIEZOKERAMISCHEN WANDLERN**
MACHINE TOOL FOR CONTROLLING THE MACHINING OF WORKPIECES USING PIEZOCERAMIC TRANSDUCERS
MACHINE OUTIL AVEC RÉGLAGE DE L'USINAGE PAR ENLÈVEMENT DE COPEAUX D'UNE PIÈCE AVEC MISE EN OEUVRE DE TRANSDUCTEURS PIÉZOCÉRAMIQUES

(30) Priorität: 03.02.2006 DE 102006005483; 07.07.2006 DE 102006031843; 29.01.2007 DE 102007005221
(43) Veröffentlichungstag der Anmeldung: 29.10.2008
(73) Patentinhaber: CeramTec GmbH, 73207 Plochingen (DE)
(72) Erfinder: TZSCHENTKE, Konrad, 91224 Pommelsbrunn (DE); SCHREINER, Hans-Jürgen, 91233 Neunkirchen Am Sand-Rollhofen (DE); HANDSCHUH, Kurt, 90542 Eckental (DE); BEN AMOR, Raouf, 73547 Lorch (DE); FRIPAN, Michael, 71522 Backnang (DE)
(74) Vertreter: Uppena, Franz
(86) Internationale Anmeldenummer: PCT/EP2007/051024
(87) Internationale Veröffentlichungsnummer: WO 2007/088197

(56) Entgegenhaltungen:
- WO-A-2005/042195
- WO-A-2005/063437
- WO-A1-2006/067398
- DE-A1- 10 229 134
- DE-A1- 19 632 148
- DE-A1- 19 925 193
- DE-C1- 10 044 592
- US-A1- 2005 109 174
- US-A1- 2005 262 975

## Beschreibung

Die Erfindung betrifft den Einsatz von piezokeramischen Wandlern zur Regelung der spanabhebenden Werkstückbearbeitung.

Spanabhebende Schneidwerkzeuge wie Drehmeißel oder Hobelmeißel bestehen in der Regel aus einem Träger oder Schaft, auf dem das Schneidelement in Form einer Schneidplatte befestigt ist. Bei Werkzeugen zum Fräsen ist der Träger, der Fräskopf, wegen der Rotation der Werkzeuge rund und auf dem Umfang mit einer Vielzahl von Schneidelementen bestückt. Während der spanabhebenden Bearbeitung von Werkstücken wirken auf die Schneidwerkzeuge neben den statischen insbesondere dynamische Belastungen. Dadurch wird im Laufe der Zeit der Werkstoff an den Schneidkanten der Schneidelemente in mikroskopisch kleinen Bereichen zerrüttet. Addieren sich diese Bereiche zu makroskopisch großen Bereichen, führt das zu Ausbrüchen an den Schneidkanten und sogar zur Zerstörung des Schneidelements mit der möglichen Folge einer Beschädigung des Werkstücks und damit seiner Unbrauchbarkeit.

Die Zerspankraft, die beim Zerspanvorgang zwischen Werkstück und Schneidwerkzeug wirkt, lässt sich in Kräfte in der Arbeitsebene und Kräfte senkrecht zur Arbeitsebene einteilen. In beiden Ebenen wirken Druckkräfte auf die Schneidkante des Schneidelements, die als Druckkräfte auf den Träger weitergegeben werden. Insbesondere bei Dreh- und Hobelmeißeln entstehen dadurch Biege- und Torsionskräfte im Träger der Schneidelemente, die beim Überschreiten einer bestimmten Höhe zur Abweichung des Schneidelements aus seiner idealen Arbeitsposition führen. Das kann zu Störungen im Arbeitsablauf führen, die sich in erhöhtem Verschleiß des Schneidelements und ungleichmäßigem Lauf der Drehspindel oder des Hobelschlittens widerspiegeln. Auch bei Fräsmaschinen treten diese Erscheinungen bei Biegekräften auf die Antriebswelle des Fräskopfs auf. Im ungünstigsten Fall kommt es zu Rattererscheinungen, die zu einer ungleichmäßigen, welligen Oberfläche des Werkstücks führen und die eine Werkzeugmaschine stark belasten, insbesondere wenn Resonanz auftritt.

Die Zerspankraft bewirkt also eine komplexe Belastung und damit Verformung von Werkzeugmaschine und Werkstück, was bei Überschreiten von Grenzwerten zu erhöhtem Verschleiß des Schneidelements und Im ungünstigsten Fall zu seiner Zerstörung führt. Außerdem können durch Überlastung Schäden an der Werkzeugmaschine und Bearbeitungsfehler am Werkstück auftreten.

Damit optimale Arbeitsergebnisse erzielt werden ist es deshalb erforderlich, insbesondere die Parameter Schnittgeschwindigkeit, Vorschub und Zustellung in Abhängigkeit von dem Werkstoff des Schneidelements optimal auf den zu bearbeitenden Werkstoff abzustimmen. Damit die Grenzwerte der möglichen Belastungen nicht überschritten werden ist es deshalb von Vorteil, wenn die auftretenden Kräfte gemessen und überwacht werden.

Aus der DE 103 12 025 A1 ist ein Verfahren zur Kompensation von Fehlern der Positionsregelung einer Maschine, insbesondere einer Werkzeugmaschine, bekannt. Durch Dehnungsmessstreifen an verschiedenen Stellen der Maschine werden die Spannungszustände gemessen und die aus den Bearbeitungskräften oder die aus den Bewegungen resultierenden Trägheitskräfte oder die aus den Gewichtskräften des Querschlittens und/oder des Werkzeugs resultierenden Verformungen berechnet und bei der Positionsregelung kompensiert. Dehnungsmessstreifen eigenen sich aber nicht zur Messung an sich drehenden Teilen wie beispielsweise Fräsköpfen. Außerdem sind Dehnungsmessstreifen wegen ihrer Trägheit für die Messung von Verformungen auf Grund hochfrequenter Schwingungen, wie sie bei der spanabhebenden Werkstückbearbeitung auftreten, nicht geeignet.

US 2005/0109174 A1 als nächstliegender Stand der Technik beschreibt eine Werkzeugmaschine mit einem spanabhebenden Schneidwerkzeug, das aus einem Träger besteht, der mindestens ein Schneidelement trägt, wobei das Schneidwerkzeug in einem Werkzeughalter beziehungsweise Lager der Werkzeugmaschine gelagert ist und die Werkzeugmaschine mit einer Einrichtung zur Regelung der spanabhebenden Bearbeitung von Werkstücken ausgerüstet ist, wobei die spanabhebenden Schneidwerkzeuge mit piezokeramischen Wandlern in Form von Sensoren, Aktoren und reinen Spannungserzeugern ausgestattet sind, dass diese Wandler an mindestens einer Stelle am Schneidwerkzeug beziehungsweise seiner Lagerung angeordnet sind, an der mindestens eine Komponente der bei der spanabhebenden Bearbeitung auftretenden Zerspankraft (-F) auf das Schneidwerkzeug wirkt, dass die Wandler mit der Regeleinrichtung der Werkzeugmaschine verbunden sind und dass die in den Wandlern auf Grund der Krafteinwirkung erzeugten und von der Regeleinrichtung verwerteten Signale zur Steuerung der Bearbeitung der Werkstücke nutzbar sind.

In US 2005/0109174 A1 werden ein Verfahren und eine Vorrichtung zur Schwingungskontrolle an einer Werkzeugmaschine zur spangebenden Werkstückbearbeitung beschrieben. In einem Werkzeughalter der Werkzeugmaschine, der mindestens ein Schneidwerkzeug trägt, sind mindestens ein Schwingungssensor und ein Aktuator mit einem aktiven Element, jeweils in Form eines Piezoelements, angeordnet. Die Signale des Schwingungssensors werden dazu genutzt, das aktive Element des Aktuators mit einer solchen Wechselspannung als Steuerspannung zu beaufschlagen, dass durch die Änderungen seiner Abmessungen Kontrollschwingungen erzeugt werden, die den durch die Werkstückbearbeitung erzeugten Schwingungen entgegengerichtet sind.

Sensor und Aktuator sind allerdings an unterschiedlichen Stellen des Werkzeughalters angeordnet. An der Stelle, wo der Aktuator auf den Werkzeughalter einwirkt und seine Gegenkraft aufbringt, kann deshalb eine völlig andere Kraft wirken als an der Stelle, wo der Sensor angeordnet ist. Die Korrekturkraft kann deshalb zu hoch oder zu niedrig sein.

WO 2005/063437 A1 beschreibt einen Werkzeughalter mit elektrostriktiven Aktorenkörpern zur Beeinflussung des Rundlaufverhaltens des Werkzeughalters. Der Werkzeughalter ist durch Aktorenkörper gezielt derart verformbar, dass die Masse des Werkzeughalters, inklusive eingespanntem Werkzeug, in einem Verformungszustand des Aktorenkörpers möglichst symmetrisch um die ideale Drehachse herum verteilt ist. Dazu wird der Aktorenkörper durch ein Signal eines Piezoelement-Sensors mit einem entsprechenden elektrischen Potential beaufschlagt. Der Sensor und der Aktorenkörper sind auf dem Außenumfang des Werkzeughalters angeordnet.

DE 102 29 134 A1 beschreibt eine Vorrichtung und ein Verfahren zur Werkstückbearbeitung mit rotierenden Werkzeugen. Speziell wird das rotierende Werkzeug durch eine im drehenden System zwischen Antriebswelle und Werkzeug angebrachte Verstelleinheit bezüglich der Antriebswelle dynamisch bewegt. Als Stellelemente können Festkörperstellelemente, insbesondere vorgespannte Piezostellelemente verwendet werden. Zu diesem Zweck ist mindestens ein Festkörperstellelement zwischen Antriebswelle und Werkzeug angebracht, wobei dieses axial, radial oder beliebig geneigt bezüglich der Drehachse der Antriebswelle angeordnet ist. Als Stellelemente werden Piezostellelemente eingesetzt. Diese können auch als Sensoren verwendet werden. Hierfür wird die auf die Piezostellelemente wirkende Kraft mittels des Piezoeffektes in den Piezostellelementen als elektrische Spannung registriert und einem Regler zugeführt.

WO 2006/067398 A1 zeigt eine Werkzeugmaschine mit einem spanabhebenden Schneidwerkzeug, das aus einem Träger besteht, der mindestens ein Schneidelement trägt, wobei das Schneidwerkzeug in einem Werkzeughalter beziehungsweise Lager der Werkzeugmaschine gelagert ist und die Werkzeugmaschine mit einer Einrichtung zur Regelung der spanabhebenden Bearbeitung von Werkstücken ausgerüstet ist. Es wird keine gesteuerte Bewegung des Schneidelements gegenüber dem Träger und des Trägers gegenüber dem Werkzeughalter beschrieben.

Der Erfindung liegt die technische Aufgabe zugrunde, eine Werkzeugmaschine nach der US 2005/0109174 A1 so zu verbessern, dass sowohl zwischen dem Schneidelement und dem Träger als auch zwischen dem Träger und der Werkzeugmaschine die auftretenden Kräfte gemessen und abhängig von diesen Kräften die Lage des Schneidelements zum Träger und die Lage des Trägers zur Werkzeugmaschine verändert wird. Außerdem sollen aufgrund der beengten Platzverhältnisse die Anordnung und die Ausführungsformen der Wandler angegeben werden.

Die Lösung der Aufgabe erfolgt nach der Erfindung mit Hilfe der Merkmale des Anspruchs 1. Vorteilhafte Ausgestaltungen der Erfindung werden in den abhängigen Ansprüchen beschrieben.

Die spanabhebenden Schneidwerkzeuge sind erfindungsgemäß mit piezokeramischen Wandlern in Form von Sensoren, Aktoren und als reine Spannungserzeuger ausgestattet. Aufbau und Wirkungsweise dieser Wandler sind aus dem Stand der Technik bekannt und werden deshalb hier nicht näher erläutert. Die Anordnung der piezokeramischen Wandler erfolgt so, dass die von ihnen jeweils zu erfüllende Funktion optimal erfüllt wird. Die Sensoren, Aktoren und Spannungserzeuger können in direktem Kontakt mit dem Schneidelement in dem Träger beziehungsweise Fräskopf eingesetzt sein. Die Sensoren, Aktoren und Spannungserzeuger werden dort angeordnet, wo der jeweilige Träger an der Werkzeugmaschine befestigt ist, zwischen Werkzeughalter und Schneidwerkzeug. Bei Fräsmaschinen können Wandler auch dort angeordnet werden, wo die Welle des Fräsers gelagert ist. Eine Kombination der beiden Anordnungen ist ebenfalls möglich.

Wegen der Befestigung des Schneidelements und der Einspannung des Trägers des Schneidwerkzeugs im Werkzeughalter stehen die piezokeramischen Wandler bereits unter einem bestimmten Druck. Um reproduzierbare Signale der Wandler zu erhalten, ist es erforderlich, nach jedem Wechsel eines Schneidelements oder eines Trägers die Vorbelastung der Wandler zu überprüfen und die Messgeräte entsprechend zu justieren.

Mit piezokeramischen Sensoren werden die auf das Schneidelement bzw. seinem Halter ausgeübten Druck-, Zug- und Scherkräfte festgestellt. Mit Hilfe der erzeugten Piezospannung kann die Höhe der jeweiligen Belastung bestimmt werden. Piezoaktoren werden durch eine angelegte Spannung verformt und können dadurch auf das Schneidelement bzw. dessen Träger aktiv einwirken und eine Positionsveränderung bewirken. Die Spannungserzeuger werden auf Grund der auf sie einwirkenden Kräfte verformt und erzeugen dadurch eine elektrische Spannung. Diese kann zur Versorgung elektronischer Schaltungen genutzt werden, die beispielsweise beim Fräsen der berührungslosen Übertragung von Signalen zwischen dem Schneidwerkzeug und der Werkzeugmaschine dienen.

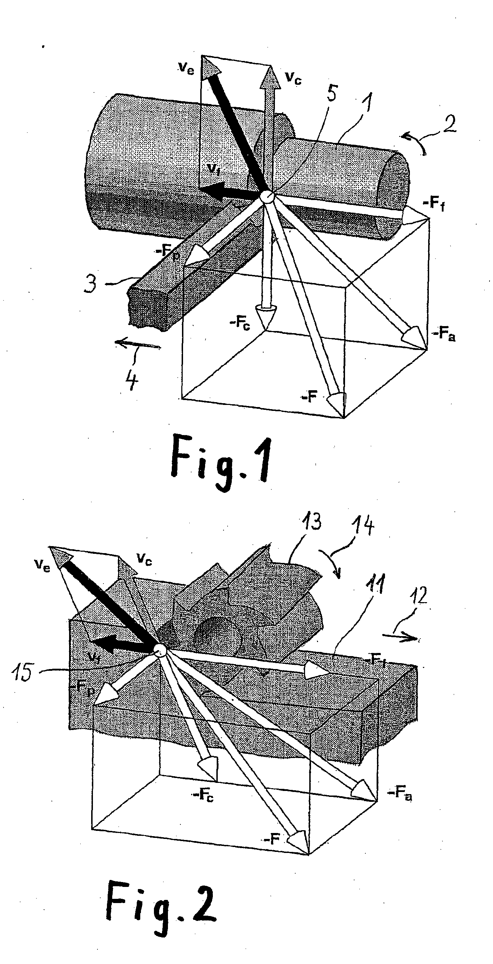

Um die Belastungen von Schneidwerkzeug und Werkzeugmaschine ermitteln zu können, wird die Zerspankraft in ihre Komponenten zerlegt. Dazu wird ein räumliches Koordinatensystem mit seinem Nullpunkt in den Berührungspunkt der Schneidkante des Schneidelements mit dem Werkstück gelegt, wobei die Achsen in der Arbeitsebene und in der Ebene senkrecht zu ihr liegen. Die Zerspankraft wird in Komponenten zerlegt, die in den beiden Ebenen liegen, wie aus den Figuren 1 und 2 ersichtlich. Die Kräfte dort sind so eingezeichnet, wie sie auf das Schneidelement bzw. den Träger wirken. Die Zerspankraft F wirkt auf den Drehmeißel bzw. den Fräser in Richtung -F Die in Richtung des Trägers wirkende Passivkraft -Fp beansprucht das Schneidelement und damit den Träger und den Werkzeughalter auf Druck. Die Aktivkraft -Fₐ kann in die Vorschubkraft -F_{f} und die Schnittkraft -F_{c} zerlegt werden. Die in Längsrichtung des Werkstücks verlaufende Vorschubkraft -F_{f} sowie die senkrecht zu ihr verlaufende Schnittkraft -F_{c} üben jeweils eine Biegekraft auf den Träger aus, wobei die Summe dieser Kräfte in der Drehmaschine zu einer Torsion des Trägers und in einer Fräsmaschine zur Biegung der Antriebswelle des Fräsers führt. Zur Erfassung der Kraftkomponenten sind also mindestens drei Wandler in Form von Sensoren erforderlich. Die Sensoren müssen zur Erfassung der Kräfte in einer Drehmaschine unter dem Schneidelement bzw. dem Träger und, in Vorschubrichtung v_{f} gesehen, vor dem Schneidelement bzw. dem Träger im Werkzeughalter und in Richtung auf das Werkstück gesehen vor dem Schneidelement oder Träger angeordnet werden. Bei einer Fräsmaschine erfolgt die Anordnung unter und hinter den Schneidelementen im Fräskopf und in den Lagern der Antriebswelle des Fräskopfs zur Erfassung der Biegekräfte auf die Welle.

Die zur Erfassung der bei der spanabhebenden Bearbeitung von Werkstücken auftretenden Kräfte eingesetzten Wandler erzeugen auf Grund des ständigen Wechsels der Größe der auf sie einwirkenden Kräfte eine Spannung, die in der Werkzeugmaschine in der Auswerteeinheit eines Rechners kontinuierlich mit vorgegebenen Grenzwerten verglichen wird. Bei einem bekannten Verschleißverhalten der Schneidelemente können durch Einstellen der Parameter Drehzahl des Werkstücks bzw. des Schneidwerkzeugs, Vorschubgeschwindigkeit und Zustellung, also Spantiefe, die auf das Schneidelement einwirkenden Kräfte auf Werte begrenzt werden, die ein optimales Verschleißverhalten ermöglichen. Treten unzulässige Abweichungen auf, kann durch einen Eingriff in den Arbeitsablauf die Störung behoben werden. Beim Drehen können die Werkstückdrehzahl, der Vorschub und die Zustellung des Schneidwerkzeugs und beim Hobeln der Vorschub und die Zustellung verändert werden. Beim Fräsen werden in der Regel die Fräskopfdrehzahl und/oder, je nach Bauart, der Werkstückvorschub oder der Fräskopfvorschub geändert. Das Auftreten von Rattererscheinungen, die sich in einer periodischen Drehzahländerung des Werkstücks bzw. des Fräskopfs und einer periodischen Schwingung des Trägers und sogar des Werkstücks bemerkbar machen, wird durch Änderungen der Drehzahl und/oder des Vorschubs verhindert. Diese Maßnahmen tragen vorteilhaft zu einer erheblichen Verlängerung der Lebensdauer der Schneidwerkzeuge und damit ihrer Standzeit bei und zu einer verbesserten Qualität der bearbeiteten Oberfläche.

Die Erfindung ermöglicht es weiterhin, den Verschleiß der Schneidelemente zu überwachen. Mit zunehmendem Verschleiß ändert sich bei konstantem Vorschub und konstanter Werkstückdrehzahl die Zerspankraft kontinuierlich. Bei Erreichen eines zuvor ermittelten, für das Schneidelement charakteristischen Grenzwert kann davon ausgegangen werden, dass der nutzbare Teil des Schneidelements verbraucht ist und ein Wechsel vorgenommen werden muss. Die Erfindung ermöglicht damit vorteilhaft eine bestmögliche Ausnutzung der Schneidelemente Auf Grund der vorausberechenbaren Standzeit der Schneidelemente ist es möglich, einen rechtzeitigen Wechsel vorzusehen, der optimal in den Prozessablauf integriert werden kann, beispielsweise zum Zeitpunkt eines Werkstückwechsels.

Kommt es zu einer Beschädigung der Schneidkante oder gar einem Bruch des Schneidelements, macht sich das in einer abrupten Änderung der Zerspankraft bemerkbar. Ein solches Signal kann zur sofortigen Abschaltung der Werkzeugmaschine genutzt werden, um eine Beschädigung des Werkstücks zu vermeiden.

Zusätzlich zu den Sensoren zur Kraftmessung an dem Schneidelement und im Werkzeughalter bzw. Lager können auch Aktoren an denselben Stellen angeordnet sein. Diese Aktoren sind aktive Piezoelemente. Werden sie mit einer Spannung beaufschlagt, kontrahieren oder expandieren sie, je nach Polung der angelegten Spannung. Mit Ihnen ist es möglich, auch ohne Eingriff in die Maschinensteuerung, direkt auf die einwirkenden Kräfte zu reagieren. Wird ein Grenzwert der einwirkenden Kräfte überschritten, wird der Aktor, der dem die Grenzwertüberschreitung registrierenden Sensor parallel geschaltet ist, mit einer solchen Spannung beaufschlagt, dass die Verformung, die der registrierende Sensor erfährt, wieder ausgeglichen wird. Dadurch wird jede Veränderung der Lage des Schneidelements bzw. des Trägers sowie das Auftreten von Schwingungen verhindert.

Wegen der aufzubringenden Verformungen sind die Aktoren, die eine Lageveränderung eines Schneidelements oder eines Trägers bewirken, Vielschichtelemente. Der keramische Werkstoff, die Anzahl der Lagen und die Form und Abmessungen sind auf die jeweils erforderliche Verformung und die dazu aufzubringende Kraft abzustimmen.

Insbesondere an Fräsmaschinen, wo eine Übertragung von Signalen von dem sich drehenden Fräskopf zum Regelkreis der Werkzeugmaschine und umgekehrt schwierig ist, ist eine drahtlose Übertragung der Signale vorteilhaft. Die Spannungsversorgung des Senders und gegebenenfalls Empfängers am Fräskopf kann durch Piezoelemente erzeugt werden, die zusätzlich zu den vorhandenen Sensoren an derselben Stelle daneben oder darunter angeordnet werden.

Durch die Überwachung der Zustandsdaten der Schneidelemente und der auf die Schneidelemente und deren Träger und somit auf die Werkzeugmaschine wirkenden Kräfte wird es möglich, Überlastungen und auftretende Schwingungen, insbesondere Rattererscheinungen, zu verhindern. Das führt zu stabileren Bearbeitungsabläufen, die wiederum bessere Werkstückqualitäten und höhere Standzeiten der Schneidelemente ermöglichen.

Anhand von Ausführungsbeispielen wird die Erfindung näher erläutert. Es zeigen
- Figur 1:: in einer Prinzipskizze den Verlauf der Kraftvektoren und der Geschwindigkeitsvektoren, die beim Drehen und
- Figur 2:: beim Gegenlauffräsen auftreten,
- Figur 3:: die Anordnung von Wandlern am Schneidelement und im Bereich der Einspannung des Trägers in der Seitenansicht und
- Figur 4:: in der Aufsicht.

In Figur 1 sind der Verlauf der Kräfte und der Geschwindigkeiten dargestellt, wie sie beim Langdrehen auftreten. An einem Werkstück 1, das sich in Pfeilrichtung 2 dreht, wird ein Schneidwerkzeug 3 in Pfeilrichtung 4 zum Spanabheben entlanggeführt. In der Schneidenecke des Schneidelements liegt der Nullpunkt 5 eines räumlichen Koordinatensystems. In der Ebene des Systems, in der das Werkstück liegt, liegt die Vorschubrichtung und in der Ebene senkrecht dazu erfolgt die Zustellung des Schneidwerkzeugs 3. Die Bewegungen beim Zerspanvorgang, beim Drehen, Hobeln und Fräsen, sind Relativbewegungen zwischen der Schneide des Schneidelements und dem Werkstück. Sie werden von der Werkzeugmaschine an der Wirkstelle, hier im Punkt 5, erzeugt und sind auf das ruhende Werkstück bezogen. Die Hauptschneide bewegt sich mit der Wirkgeschwindigkeit vₑ entlang dem Werkstück 1, wobei die Zerspankraft -F auf das Schneidelement und damit auf den Träger und letztendlich auf die Werkzeugmaschine wirkt.

Wie bereits beschrieben, lässt sich die Zerspankraft -F in Kräfte in der Arbeitsebene und Kräfte senkrecht zur Arbeitsebene zerlegen. In der Arbeitsebene liegt die Aktivkraft -Fₐ, die maßgeblich für die Berechnung der Zerspanleistung ist, und senkrecht zur Arbeitsebene die Passivkraft -Fₚ, die keinen Beitrag an der Zerspanleistung leistet, aber das Schneidelement, damit das Schneidwerkzeug 3 und letztlich die Werkzeugmaschine auf Druck belastet. Die Aktivkraft -Fₐ kann entsprechend der Vorschub- und Schnittrichtung in der Arbeitsebene in die Komponenten Schnittkraft -F_{c} und Vorschubkraft -F_{f} zerlegt werden, die als Biegungs- bzw. Torsionskräfte auf das Schneidwerkzeug 3 wirken.

Bei dem in Figur 2 dargestellten Zerspanvorgang des Gegenlauffräsens treten dieselben Kräfte wie beim in Figur 1 dargestellten Langdrehen sowie beim Hobeln auf. Der Unterschied besteht allerdings darin, dass sich ein Schneidelement eines Fräsers über die Hälfte des Umfangs des Fräsers mit dem Werkstück im Eingriff befindet und dass das hier gezeigte Koordinatensystem die Kräfteverteilung nur in einem Punkt des Eingriffs wiedergibt. Beim Gegenlauffräsen bewegt sich das Werkstück 11 in Pfeilrichtung 12 unter dem ortsfesten Schneidwerkzeug, einem sich in Pfeilrichtung 14 drehenden Wafzenfräser 13, hindurch. In einem der Eingriffspunkte der Schneidkante des Schneidelements liegt der Mittelpunkt 15 des Koordinatensystems zur Zerlegung der Zerspankraft -F in diesem Punkt.

Durch entsprechende Anordnung von Sensoren ist es möglich, die Kräfte -Fp, -F_{f} und -F_{c} zu ermitteln und dadurch Aufschluss über den Zerspanvorgang und die Belastung des Schneidelements und der Werkzeugmaschine zu erhalten. Bei Fräsern ist die Anordnung der Sensoren jeweils hinter und, radial gesehen, unter einem Schneidelement auf dem Fräskopf möglich. Hier werden die Schneidelemente periodisch bei jedem Eingriff belastet.

Die während des Zerspanvorgangs in den Sensoren erzeugten Spannungen sind ein Maß für die jeweiligen Belastungen der Schneidelemente und der Werkzeugmaschine. Beim Überschreiten vorher festgelegter Grenzwerte wird in den Regelkreis der Werkzeugmaschine eingegriffen, indem beispielsweise Vorschub und/oder Drehzahlen verändert werden.

Durch eine vergleichbare Anordnung von Aktoren ist es möglich, den beim Zerspanvorgang auftretenden Kräften entgegenzuwirken und damit die Verformungen auszugleichen. Wird eine Verformung durch einen Sensor ermittelt, wird an den an dieser Stelle wirkenden Aktor eine Spannung in einer solchen Höhe angelegt, dass eine entgegengerichtete Verformung erzeugt wird, die der Verformung des Sensors entspricht. Diese wirkt der beim Zerspanvorgang erzeugten Kraft entgegen und gleicht die auftretenden Verformungen aus. Auch auftretende Schwingungen können so verhindert oder zumindest gedämpft werden.

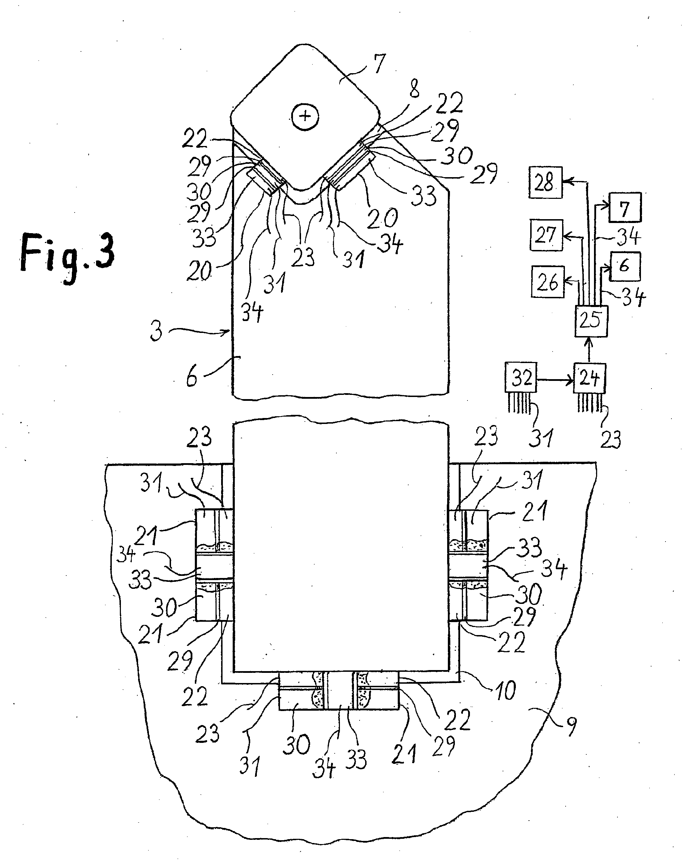

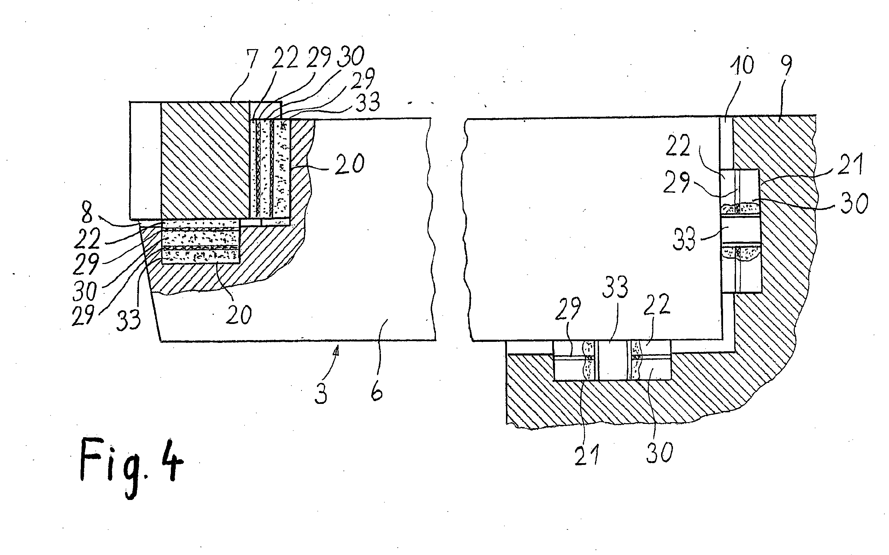

In den Figuren 3 und 4 ist ein Schneidwerkzeug 3, ein Drehmeißel, mit der erfindungsgemäßen Ausstattung mit piezokeramischen Wandlern dargestellt. Die Darstellung ist schematisch. Figur 3 zeigt die Aufsicht auf das Schneidwerkzeug. Auf dem Träger 6 ist ein Schneidelement 7 in Form einer Schneidplatte in einer Ausnehmung 8 des Trägers 6 so befestigt, dass eine gesteuerte Bewegung gegenüber dem Träger möglich ist. Der Träger 6 ist in einem Werkzeughalter 9 in einer Ausnehmung 10 ebenfalls so befestigt, dass eine gesteuerte Bewegung gegenüber dem Werkzeughalter 9 möglich ist.

Sowohl zwischen dem Schneidelement 7 und dem Träger 6 als auch zwischen dem Träger 6 und dem Werkzeughalter 9 sind Wandler angeordnet, die sich in Ausnehmungen 20 bzw. 21 abstützen. Zusätzlich zur Bestimmung der Krafteinwirkung auf das Schneidelement werden auch die Krafteinwirkungen auf die Werkzeugmaschine bestimmt. Wegen des geringen Platzes, der zum Einbau der Wandler zur Verfügung steht, sind Wandler übereinander anzuordnen. Durch Aktoren 33 kann direkt an den Angriffsstellen der Kräfte deren Wirkungen entgegengewirkt werden.

An dem Schneidelement 7 sowie dem Träger 6 liegen zunächst Sensoren 22 an, die zur Ermittlung der Krafteinwirkung auf das Schneidelement 7 bzw. den Werkzeughalter 9 und damit auf die Werkzeugmaschine bestimmt sind. Da die Sensoren der Signalerzeugung dienen, werden einschichtige Piezoelemente eingesetzt, um die baulichen Veränderungen möglichst gering zu halten. Die in diesen Sensoren durch die Krafteinwirkung erzeugten Spannungen werden als Signale 23 zunächst an eine Signalempfänger- und Triggerschaltung 24 geleitet. Dort werden die Signale auf Grenzwertüberschreitungen geprüft und beim Überschreiten oder Unterschreiten einer zuvor festgelegten Kraft an dem Schneidelement 7 oder am Träger 6 im Werkzeughalter 9 wird ein Signal an die Regeleinrichtung 25 der Werkzeugmaschine weitergeleitet. Diese kann in den Betriebsablauf der Werkzeugmaschine eingreifen und ihren Antrieb 26, also die Drehzahl, den Vorschub 27 und/oder die Zustellung 28 ändern. Ein Blockschaltbild verdeutlicht die Signalverarbeitung.

Zwischen den Sensoren 22 und dem Träger 6 sind, durch eine isolierende Stützplatte 29 voneinander getrennt, Wandler in Form von Spannungserzeugern 30 angeordnet. Im Gegensatz zu den Sensoren sind hier Vielschichtelemente erforderlich. Die durch die wechselnde Krafteinwirkung in ihnen erzeugte Spannung 31 wird zu einer Gleichrichtereinheit 32 geleitet und kann zur Versorgung elektronischer Schaltungen, beispielsweise in der Signalempfängerund Triggerschaltung 24, genutzt werden.

Durch Aktoren 33 kann auch direkt an den Angriffsstellen der Kräfte eingegriffen werden. Den mit Hilfe der Sensoren 22 ermittelten Verformungen kann direkt an den Angriffsstellen der Kräfte entgegengewirkt werden, indem diese Aktoren 33 mit einer Spannung 34 beaufschlagt werden, deren Höhe und Polung so gewählt ist, dass durch die Aktoren 33 eine genau so große entgegengesetzte Verformung bewirkt wird, wie an der Stelle des jeweiligen Sensors an dem Schneidelement 7 beziehungsweise dem Träger 6 ermittelt wird. Im vorliegenden erfindungsgemäßen Ausführungsbeispiel sind die Aktoren 33 an dem Schneidelement 7 zwischen den Spannungserzeugern 30 und dem Träger 6 angeordnet, ebenfalls durch eine isolierende Stützplatte 29 getrennt. Wegen der großen Verstellwege, die von den Aktoren 33 bei begrenzter Betriebsspannung aufgebracht werden müssen, sind hier Vielschichtelemente erforderlich. Im Werkzeughalter 9 sind sie so angeordnet, dass unter Berücksichtigung der Bauart eine maximale Kraftwirkung auf den Träger 6 ausgeübt werden kann, wobei sie hier von den Sensoren 22 und Spannungserzeugern 30 konzentrisch umgeben sind. Dadurch wird eine gleichmäßige Verteilung der auf die Sensoren bzw. Spannungserzeuger wirkenden Kräfte erreicht und gleichzeitig kann der Aktor jeweils im Mittelpunkt dieser Kräfteverteilung einwirken.

Die Steuerung der Werkstückbearbeitung mittels Aktoren kann allein oder unter Einbeziehung der Steuerung der Werkzeugmaschine, d.h. der Regelung von Drehzahl, Vorschub und Zustellung, erfolgen.

In Figur 4 ist die Seitenansicht des Drehmeißels aus Figur 3 dargestellt. Gleichgeartete Funktionselemente sind deshalb mit denselben Bezugsziffern wie in Figur 3 bezeichnet. Die Befestigungselemente des Schneidelements sowie des Drehmeißels sind der Übersichtlichkeit halber weggelassen. Der Träger 6 ist im Bereich des Schneidelements 7 und der Einspannung im Werkzeughalter 9 geschnitten, um die mögliche Anordnung der Wandler unterhalb des Schneidelements und unterhalb des Trägers im Werkzeughalter zu zeigen, Im Bereich des Schneidelements sind die Wandler sowie die Stützplatten geschnitten dargestellt. Durch die Anordnung der Wandler unterhalb von Schneidelement und Träger ist es möglich, die Komponenten der Zerspankraft zu ermitteln, die senkrecht an Schneidelement und Träger angreifen. Die Aktoren 33, die den auf das Schneidelement und die Werkzeugmaschine einwirkenden Kräften entgegenwirken sollen, sind an den Angriffsstellen dieser Kräfte angeordnet.

## Patentansprüche

1. Werkzeugmaschine mit einem spanabhebenden Schneidwerkzeug (3), das aus einem Träger (6) besteht, der mindestens ein Schneidelement (7) trägt, wobei das Schneidwerkzeug (3) in einem Werkzeughalter (9) beziehungsweise Lager der Werkzeugmaschine gelagert ist und die Werkzeugmaschine mit einer Einrichtung zur Regelung (25) der spanabhebenden Bearbeitung von Werkstücken ausgerüstet ist, wobei das spanabhebende Schneidwerkzeug mit piezokeramischen Wandlern (22, 30, 33) in Form von Sensoren (22), Aktoren (33) oder reinen Spannungserzeugern (30) ausgestattet ist, wobei diese Wandler an mindestens einer Stelle am Schneidwerkzeug (3) beziehungsweise seiner Lagerung angeordnet sind, an der mindestens eine Komponente (-F_{c}, -F_{f}, - Fp) der bei der spanabhebenden Bearbeitung auftretenden Zerspankraft (-F) auf das Schneidwerkzeug (3) wirkt, wobei die Wandler (22, 30, 33) mit der Regeleinrichtung (25) der Werkzeugmaschine verbunden sind und die in den Wandlern (22, 30, 33) auf Grund der Krafteinwirkung erzeugten und von der Regeleinrichtung (25) verwerteten Signale (23, 31, 34) zur Steuerung der Bearbeitung der Werkstücke nutzbar sind, wobei
a) auf dem Träger (6) ein Schneidelement (7) in Form einer Schneidplatte in einer Ausnehmung (8) des Trägers (6) so befestigt ist, dass eine gesteuerte Bewegung gegenüber dem Träger (6) möglich ist und der Träger (6) in einem Werkzeughalter (9) in einer Ausnehmung (10) ebenfalls so befestigt ist, dass eine gesteuerte Bewegung gegenüber dem Werkzeughalter (9) möglich ist,
b) die piezokeramischen Wandler (22, 30, 33) sowohl zwischen dem Schneidelement (7) und dem Träger (6) des Schneidwerkzeugs (3), als auch zwischen dem Träger (6) des Schneidwerkzeugs (3) und dem Werkzeughalter (9) angeordnet sind und sich in Ausnehmungen abstützen,
c) an dem Schneidelement (7) sowie dem Träger (6) zunächst Sensoren (22) an liegen, die zur Ermittlung der Krafteinwirkung auf das Schneidelement (7) bzw. den Werkzeughalter (9) und damit auf die Werkzeugmaschine bestimmt sind und diese Sensoren (22) einschichtige Piezoelemente sind,
d) zwischen den Sensoren (22) und dem Träger (6) und zwischen den Sensoren (22) und dem Werkzeughalter (9) sind, durch eine isolierende Stützplatte (29) voneinander getrennt, Wandler in Form von Spannungserzeugern (30) angeordnet und diese sind Vielschichtelemente,
e) an dem Schneidelement (7) zwischen den Spannungserzeugern (30) und dem Träger (6) Aktoren (33) angeordnet sind, ebenfalls durch eine isolierende Stützplatte (29) getrennt und diese Aktoren (33) Vielschichtelemente sind,
f) im Werkzeughalter (9) die Aktoren (33) so angeordnet sind, dass unter Berücksichtigung der Bauart eine maximale Kraftwirkung auf den Träger (6) ausgeübt werden kann, wobei sie von den Sensoren (22) und Spannungserzeugern (30) konzentrisch umgeben sind.

2. Werkzeugmaschine nach Anspruch 1, **dadurch gekennzeichnet, dass** die piezokeramischen Wandler Sensoren (22) zur Ermittlung mindestens einer Komponente (-F_{c}, -F_{f}, -Fₚ) der auf das Schneidwerkzeug (3) wirkenden Zerspankraft (-F) sind.

3. Werkzeugmaschine nach Anspruch 1, **dadurch gekennzeichnet, dass** die piezokeramischen Wandler Aktoren (33) zur Korrektur der durch die Zerspankraft (-F) bewirkten Positionsänderungen des Schneidwerkzeugs (3) und/oder Schneidelements (7) sowie zur Dämpfung oder Kompensation von Schwingungen sind.

4. Werkzeugmaschine nach Anspruch 3, **dadurch gekennzeichnet, dass** die Aktoren (33) Vieischicht-Piezoelemente sind.

## Claims

1. A machine tool having a material-removing cutting tool (3), consisting of a carrier (6) which carries at least one cutting element (7), wherein the cutting tool (3) is mounted in a tool holder (9) or bearing of the machine tool, and the machine tool is equipped with a device for controlling (25) the machining of workpieces, wherein the material-removing cutting tool is equipped with piezoceramic transducers (22, 30, 33) in the form of sensors (22), actuators (33) or pure voltage generators (30), wherein these transducers are arranged at at least one location on the cutting tool (3) or on its bearing arrangement, at which location at least one component (-F_{c}, -F_{f}, -Fₚ) of the cutting force (-F) arising during the machining acts on the cutting tool (3), wherein the transducers (22, 30, 33) are connected to the control device (25) of the machine tool, and the signals (23, 31, 34) generated in the transducers (22, 30, 33) as a result of the action of forces and utilized by the control device (25) can be used for controlling the machining of the workpieces, wherein
a) on the carrier (6) a cutting element (7) in the form of a cutting plate is fastened in a recess (8) of the carrier (6) in such a manner that a controlled movement with respect to the carrier (6) is possible, and the carrier (6) is likewise fastened in a tool holder (9) in a recess (10) in such a manner that a controlled movement with respect to the tool holder (9) is possible,
b) the piezoceramic transducers (22, 30, 33) are arranged both between the cutting element (7) and the carrier (6) of the cutting tool (3) and between the carrier (6) of the cutting tool (3) and the tool holder (9) and are supported in recesses,
c) positioned against the cutting element (7) and also the carrier (6) there are firstly sensors (22) which are intended to determine the forces acting on the cutting element (7) or the tool holder (9) respectively and therefore on the machine tool, and these sensors (22) are single-layer piezo elements,
d) arranged between the sensors (22) and the carrier (6) and between the sensors (22) and the tool holder (9), separated from one another by an insulating support plate (29), there are transducers in the form of voltage generators (30), and these are multi-layer elements,
e) arranged on the cutting element (7) between the voltage generators (30) and the carrier (6) there are actuators (33), likewise separated by an insulating support plate (29), and these actuators (33) are multi-layer elements,
f) the actuators (33) are arranged in the tool holder (9) in such a manner that, taking account of the type of construction, a maximum force can be exerted on the carrier (6), wherein they are surrounded concentrically by the sensors (22) and voltage generators (30).

2. A machine tool according to claim 1, **characterised in that** the piezoceramic transducers are sensors (22) for determining at least one component (-F_{c}, -F_{f}, -Fₚ) of the cutting force (-F) acting on the cutting tool (3).

3. A machine tool according to claim 1, **characterised in that** the piezoceramic transducers are actuators (33) for correcting the positional changes of the cutting tool (3) and/or the cutting element (7) that are caused by the cutting force (-F), and for damping or compensating oscillations.

4. A machine tool according to claim 3, **characterised in that** the actuators (33) are multi-layer piezo elements.

## Revendications

1. Machine-outil comprenant un outil de coupe par enlèvement de copeaux (3), lequel est constitué d'un élément porteur (6) qui porte au moins l'élément de coupe (7), l'outil de coupe (3) étant monté dans un porte-outil (9), respectivement dans un moyen de montage de la machine-outil, et la machine-outil étant équipée d'un dispositif de régulation (25) de l'usinage de pièces par enlèvement de copeaux, l'outil de coupe par enlèvement de copeaux étant muni de transducteurs piézocéramiques (22, 30, 33) en forme de capteurs (22), d'actionneurs (33) ou de simples générateurs de tension (30), ces transducteurs étant disposés en au moins un endroit de l'outil de coupe (3), respectivement de son moyen de montage où au moins une composante (-F_{c}, -F_{f}, -Fₚ) de la force d'enlèvement (-F) produite lors de l'usinage par enlèvement de copeaux s'exerce sur l'outil de coupe (3), les transducteurs (22, 30, 33) étant connectés au dispositif de régulation (25) de la machine-outil, et les signaux (23, 31, 34) générés dans les transducteurs (22, 30, 33) sous l'action de la force et utilisés par le dispositif de régulation (25) étant exploitables pour commander l'usinage de la pièce,
a) sur l'élément porteur (6) étant fixé, dans un évidement (8), un élément de coupe (7) en forme de plaquette de coupe, de manière à permettre un déplacement commandé par rapport à l'élément porteur (6), l'élément porteur (6) étant lui aussi fixé, dans un évidement (10), dans le porte-outil (9), de manière à permettre un déplacement commandé par rapport au porte-outil (9),
b) les transducteurs piézocéramiques (22, 30, 33) étant disposés aussi bien entre l'élément de coupe (7) et l'élément porteur (6) de l'outil de coupe (3) qu'entre l'élément porteur (6) de l'outil de coupe (3) et le porte-outil (9) et prenant appui dans des évidements,
c) contre l'élément de coupe (7) et l'élément porteur (6) étant d'abord appliqués des capteurs (22) qui servent à déterminer la force exercée sur l'élément de coupe (7), respectivement sur le porte-outil (9) et donc sur la machine-outil, et ces capteurs (22) étant des piézo-éléments monocouche,
d) entre les capteurs (22) et l'élément porteur (6) et entre les capteurs (22) et le porte-outil (9) étant disposés, en étant séparés de ceux-ci par une plaque d'appui isolante (29), des transducteurs en forme de générateurs de tension (30), lesquels sont des éléments multicouche,
e) sur l'élément de coupe (7) entre les générateurs de tension (30) et l'élément porteur (6) étant disposés des actionneurs (33), dont ils sont également séparés par une plaque d'appui isolante (29), et ces actionneurs (33) étant des éléments multicouche,
f) les actionneurs (33) étant disposés dans le porte-outil (9), de façon que, selon le type de construction, la force exercée sur l'élément porteur (6) puisse être maximale, lesdits actionneurs étant entourés concentriquement par les capteurs (22) et par les générateurs de tension (30).

2. Machine-outil selon la revendication 1, **caractérisée en ce que** les transducteurs piézocéramiques sont des capteurs (22) pour déterminer au moins une composante (-F_{c}, -F_{f}, -Fp) de la force d'enlèvement (-F) agissant sur l'outil de coupe (3).

3. Machine-outil selon la revendication 1, **caractérisée en ce que** les transducteurs piézocéramiques sont des actionneurs (33) pour corriger les changements de position de l'outil de coupe (3) et/ou de l'élément de coupe (7) dus à la force d'enlèvement (-F) ainsi que pour amortir ou compenser des vibrations.

4. Machine-outil selon la revendication 3, **caractérisée en ce que** les actionneurs (33) sont des piézo-éléments multicouche.
